# EUROPEAN PATENT SPECIFICATION

(11) **EP 4 468 170 B1**
(45) Date of publication and mention of the grant of the patent: **07.10.2026**
(21) Application number: 23885157.0
(22) Date of filing: 31.05.2023
(51) Int. Cl.: G06F 16/27, G06F 8/72, G06F 8/75, G06F 16/21

(54) **APPLICATION MIGRATION METHOD FROM CLIENT-SERVER ARCHITECTURE TO BLOCKCHAIN ARCHITECTURE**
ANWENDUNGSMIGRATION VERFAHREN VON EINER CLIENT-SERVER-ARCHITEKTUR ZU EINER BLOCKCHAIN-ARCHITEKTUR
MIGRATION D'APPLICATION PROCÉDÉ D'UNE ARCHITECTURE CLIENT-SERVEUR À UNE ARCHITECTURE DE CHAÎNE DE BLOCS

(30) Priority: 07.04.2023 CN 202310366690
(43) Date of publication of application: 27.11.2024
(73) Proprietor: Fuzhou University, 350108 Fuzhou Fujian (CN)
(72) Inventor: CHEN, Xing, Fuzhou Fujian 350108 (CN); LIN, Liqiang, Fuzhou Fujian 350108 (CN); CHEN, Hanlin, Fuzhou Fujian 350108 (CN)
(74) Representative: Bayramoglu et al.
(86) International application number: PCT/CN2023/097419
(87) International publication number: WO 2024/207609

(56) References cited:
- CN-A- 113 157 723
- US-A1- 2020 042 706
- DAVID BRUMLEY AND DAWN SONG CARNEGIE MELLON UNIVERSITY {DAVID BRUMLEY ET AL: "Privtrans: Automatically Partitioning Programs for Privilege Separation", USENIX, USENIX, THE ADVANCED COMPUTING SYSTEMS ASSOCIATION, 27 July 2004 (2004-07-27), pages 1 - 16, XP061012491
- WANG YILAN, SONG GUO: "Backdoor Detection for Java Language Based on Static Analysis", XINXI WANGLUO ANQUAN = NETINFO SECURITY, GONGANBU JISUANJI XINXI XITONG ANQUAN CHANPIN ZHILIANG JIANDU JIANYAN ZHONGXIN, CN, no. 7, 1 July 2012 (2012-07-01), CN , pages 43 - 45, XP093220445, ISSN: 1671-1122, DOI: 10.3969/j.issn.1671-1122.2012.07.011
- YU ZHIYONG, LIN LI-QIANG; CHEN YAN; ZHOU TIAN; NI YI-TAO; CHEN XING: "SQL Access Framework for Hyperledger Fabric", COMPUTER SCIENCE, KEXUE JISHU WENXIAN CHUBANSHE CHONGQING FENSHE, CN, vol. 48, no. 11, 1 November 2021 (2021-11-01), CN , pages 54 - 61, XP093220448, ISSN: 1002-137X, DOI: 10.11896/jsjkx.210100220
- LIU ZHANGHUI, HUANG ZHIHAO, CHEN XING, CHEN YAN: "The Transformation from Traditional Application to Blockchain-Based Application : First International Conference, BlockSys 2019, Guangzhou, China, December 7–8, 2019, Proceedings", BLOCKCHAIN AND TRUSTWORTHY SYSTEMS : FIRST INTERNATIONAL CONFERENCE, BLOCKSYS 2019, GUANGZHOU, CHINA, DECEMBER 7–8, 2019, PROCEEDINGS, SPRINGER SINGAPORE, SINGAPORE, vol. 1156, 1 January 2020 (2020-01-01) - 8 December 2019 (2019-12-08), Singapore, pages 483 - 488, XP009558044, ISSN: 1865-0929, ISBN: 978-981-15-2777-7, DOI: 10.1007/978-981-15-2777-7_39

## Description

### FIELD OF TECHNOLOGY

The present invention relates to the technical field of blockchain, and particularly relates to an application migration method from client-server architecture to blockchain architecture.

### BACKGROUND

With rapid development of the blockchain technology, many organizations now try a blockchain solution. In this newborn stage, due to scarcity of experts in the field of blockchain, a tendency of converting a legacy system automatically into a system based on blockchain is increasingly large. However, it is a challenge to transition from the prior art to the blockchain technology. In the industry, the blockchain solution is only developed started from scratch or a database terminal of an original application is only transformed. The former needs a lot of time and money with a huge cost, and the latter cannot be guaranteed in safety. DAVID BRUMLEY AND DAWN SONG CARNEGIE MELLON UNIVERSITY {DAVID BRUMLEY ET AL: "Privtrans: Automatically Partitioning Programs for Privilege Separation",USENIX, USENIX, THE ADVANCED COMPUTING SYSTEMS ASSOCIATION, 27 July 2004, pages 1-16, [retrieved on 2004-07-27] have shown how to automatically integrate privilege separation into source code.

### SUMMARY

In view of this, an object of the present invention is to provide an application migration method from client-server architecture to blockchain architecture, which can effectively improve the development efficiency of the blockchain application.

To achieve the above object, the present invention adopts the following technical solution: The invention is set out in the appended set of claims.-

Compared with the prior art, the present invention has the following beneficial effect: the present invention provides an adaptive migration framework to promote the existing client-server architecture application to be migrated to the application based on the blockchain. First, the method includes the following steps: establishing the program call tree, constructing a program call tree of the whole application program from the main function through static code analysis, and marking the key data on the call tree; then, defining the taint propagation rule for taint analysis by taking key data as tainted data, to acquire all taint variables in an application program; and finally, identifying the key module of the application program on the program call tree in combination with the tainted path, and setting the code refactoring rule to perform code refactoring on the method in the key module according to the special program structure. The method is evaluated by way of exemplary studies, and experimental results show that the method can effectively improve the development efficiency of the blockchain application.

### BRIEF DESCRIPTION OF THE DRAWINGS

FIG. 1 is a schematic diagram where structures and calling processes of a native application and a target application are described according to a preferred embodiment of the present invention, where (a) is a source program structure, and (b) is a target program structure;
FIG. 2 is a schematic diagram of generating steps of the method wrapper in the preferred embodiment of the present invention, where (a) is the source program, and (b) is the method wrapper; and
FIG. 3 is a schematic diagram of a construction rule of a method proxy in the preferred embodiment of the present invention, where (a) is the source program, and (b) is the method proxy.

### DESCRIPTION OF THE EMBODIMENTS

Further description of the present invention will be made below in combination with drawings and embodiments.

It is to be noted that the detailed description below is exemplary and is intended to further describe the application. Unless specified otherwise, all technical and scientific terms used herein have the same meaning as commonly understood by those of ordinary skill in the art to which the application belongs.

It is to be noted that the terms used herein are merely used for describing specific embodiments, and are not intended to limit the exemplary embodiments according to the present application; as used herein, unless otherwise specified in the context, the singular form is further intended to include plural form. In addition, it is to be further understood that when the terms "comprise" and/or "include" are used in the description, it indicates that there are features, steps, operations, apparatuses, assemblies and/or their combinations.

An application migration method from client-server architecture to blockchain architecture includes the following steps: S1: modeling an application program of a conventional client-server architecture and abstracting the application to a program call tree; S2: defining a taint propagation rule for taint analysis by taking key data as tainted data, to acquire all taint variables in an application program; and S3: identifying a key module of the application program on the program call tree according to a tainted path, and setting a code refactoring rule to perform code refactoring on a method in the key module according to a special program structure.

The step 1 specifically includes: establishing the program call tree, constructing the program call tree of the whole program from the main function through static code analysis, and marking the key data on the program call tree; and definitions of the program call tree are as follows:
definition 1: the program structure of an application program of client-server architecture is represented as a program call tree *Treeᵣ*=(*M, R, K),* where *M= m₁, m₂, ..., mₙ*} represents a node set of the program call tree; *R* represents a node call relationship set, any one *rₘᵢ₋ₘⱼ* ∈*R* represents a side of the program call tree, representing that a method *mᵢ* calls a method *mⱼ*; and *K*={*keydata₁, keydata₂,... ,keydataₙ*} represents a key data set in a system;
definition 2: a method node of a program call tree includes a unique identifier and a call path of the method, a statement set of the method and a set of the key data in the method, and *mᵢ=<mSignᵢ, mPath, Uᵢ, kset >* is represented by a quaternion, where *mSign* represents the unique identifier of the method *mᵢ*, *mPath* represents a method call path from the main function to *mᵢ*, *kset* is used to record all key data in the method *mᵢ*, and *Uᵢ* represents the statement set of the method *mᵢ*;
definition 3: *mSignᵢ=*{*mSig*|*mName,mParams,returnParams*} represents the unique identifier of a method node of a program call tree; where *mName* represents a method name, *mParams* represents an entry parameter list of the method, and *returnParams* represents returned parameters of the method;
definition 4: *mPath=*{*mSigₘₐᵢₙ*,*mSigₐ*,...,*mSigᵢ*} represents the call path of a program call tree method *mᵢ*, a combination of the unique identifiers of the method node from *mₘₐᵢₙ* to *mᵢ*, uniquely forming a path accessible to *mᵢ*;
definition 5: ${U}_{i} = \left\{{u}_{i}^{1},{u}_{i}^{2},…,{u}_{i}^{n}\right\}$ represents the statement set of the method node *mᵢ* on the program call tree, where ${u}_{i}^{j}$ represents the *j*^{th} statement of the method *mᵢ*; and
definition 6: the key data of a system includes the unique identifier of the key data in the method and a key data name, and *eydataᵢ=*{*mSignᵢ, kname}* is represented by a two-tuple, where *kname* represents a variable in the method *mᵢ* with a name of *kname,* and variables on a data flow branch where all key data is located may be key variables.

The program call tree extraction algorithm is shown as follows:

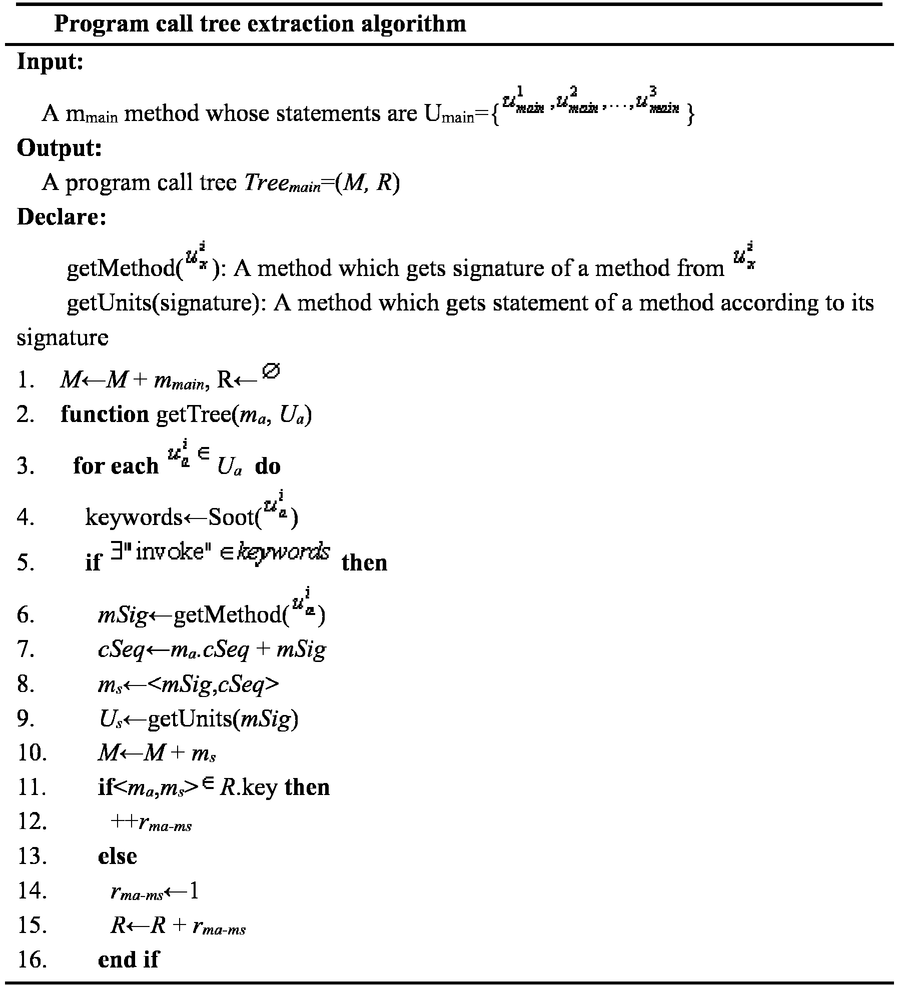

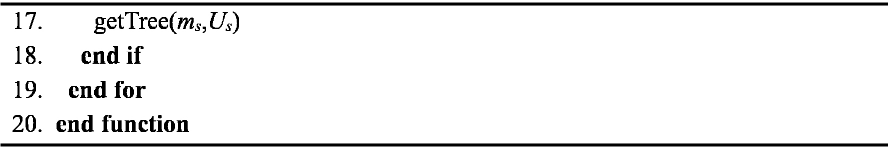

The algorithm describes the extraction process of the program call tree. The algorithm constructs a program call tree of an application taking *mₘₐᵢₙ* as a root by taking the main function *mₘₐᵢₙ* as an entry point of the application, a HashMap is used to record a R, a storage form of key is *<mᵢ*, *mⱼ*>, formula represents that *mᵢ* calls *mⱼ*, and a value corresponding thereto represents a number of times when *mᵢ* calls *mⱼ*. For the entry point *mₘₐᵢₙ* of the input program of the algorithm and the statement set *Uₘₐᵢₙ* of *mₘₐᵢₙ*, any ${u}_{main}^{i} ∈ {U}_{main}$ represents the i^{th} statement of *Uₘₐᵢₙ*. The program call tree is constructed recursively in lines 2-20 by calling a method getTree(), where parameters mₐ and Uₐ are written into the method, respectively representing a method to be analyzed and the statement set of the method. A Soot key word of ${u}_{a}^{i}$ is acquired in the 4th line, i.e., an intermediate code defined in Soot, for example, an invoke keyword represents that this is a method call statement, and an intact keyword definition can refer to a Soot manual. If the statement contains the keyword called by the method, a set *M* is updated in lines 6-10 to record that the method *mₐ* calls the method *mₛ*. A set *R* is updated in lines 11-16 to record a method call relationship and update a weight. The method *mₛ* is subjected to getTree() recursion in the 17^{th} line. When the recursion process is ended, the algorithm outputs the program call tree.

### Step 2:

| Statement type | Rule | Description (a is the key data or taint source, and b is the variable) | Conclusion |
|---|---|---|---|
| Alias | (1) b=a | a is the object reference | b is the taint source |
| Assign statement | (2) a=b | a is the basic data type | b is the taint source |
| | (3) a=b | a is the object reference | b is the taint source |
| | (4) a.f=b | f is a data member of the object a | b is the taint source |
| | (5) a=b.f | b is the object reference | b is the taint source |
| | (6) a=€(v₁,v₂...vₙ) | € is a multivariate operator | v₁,v₂...vₙ are the taint sources |
| Method declaration statement | (8) Object function( Object a, Object obj2...) | a is the object reference | An actual parameter corresponding to a formal parameter a of the function method is the taint source |
| Method call statement | (9) function(para1=a, para2=b...) | a is the object reference, function is not Java API | Para1 in the function method is the taint source |
| Method return statement | (10) a=function(b) | function() is not Java API | The returned value called by this function method is the taint source |
| | a = b.function(c) | function() is not Java API | The returned value called by this function method is the taint source |
| SQL statement | a = "select filed from table where ..."+v1+v2...+vn | a is the object reference | a, v₁,v₂...vₙ are the taint sources, table is the key table |
| | a = "insert into table(filed1, filed2...) | a is the object reference | a, v₁,v₂...vₙ are the taint sources, table is the key table |
| | values(val1,val2...)" +v1+v2...+vn | | |
| | a = "update table set *field₁=val₁,field₂=val₂*,..." +v₁+v₂...+vₙ | a is the object reference | a, v₁,v₂...vₙ are the taint sources, table is the key table |
| | a = "delete from *table* where..." +v1+v2...+vn | a is the object reference | a, v₁,v₂...vₙ are the taint sources, table is |
| | | | the key table |

| Statement type | Rule | Description (*table* is the key table) | Conclusion |
|---|---|---|---|
| | a = "select filed from table where ..."+v1+v2...+vn | a is the object reference | a, v₁,v₂...vₙ are the taint sources |
| | a = "insert into table(filed1, filed2...) | a is the object reference | a, v₁,v₂...vₙ are the taint sources |
| SQL statement | values(val1,val2...)" +v1+v2...+vn | | |
| | a = "update table set *field₁=val₁,field₂=val₂*,..." +v₁+v₂...+vₙ | a is the object reference | a, v₁,v₂...vₙ are the taint sources |
| | a = "delete from *table* where..." +v1+v2...+vn | a is the object reference | a, v₁,v₂...vₙ are the taint sources |

The above table exhibits the taint propagation rule defined, where the assignment statement rule and the alias statement rule induce various modes of propagation of taint variables in a method; the method call statement rule, the method return statement rule and the method statement rule describe the propagation mode of a taint variable cross-method; the sql rule induces a situation that the taint variables are finally gathered in a database table, and in this case, the table is the key table, so that a situation that the key table is operated to introduce a new taint variable is complementarily induced.

To find out all the taint sources, it is needed to analyze each statement in the program according to the taint propagation rule. First, for each method node containing the key data, each statement in the method is analyzed according to the taint propagation rule. When the statement meets any taint propagation rule, it indicates that a new taint source is found, and the new taint source is added into a taint source set of the method for recording. When the statement meets the method call statement rule, the method return statement rule or the method statement rule, it indicates that a new method node to be analyzed is generated, and it is needed to add the method node into the set of the method node to be analyzed for recording. After a round of analysis of all statements of the method is ended, if the new taint source is added into the taint source set of the method, a new round of iteration is started to analyze the method. Finally, the set of the method node to be analyzed is traversed to analyze each method node in the set one by one. The taint propagation analysis algorithm is shown as follows:

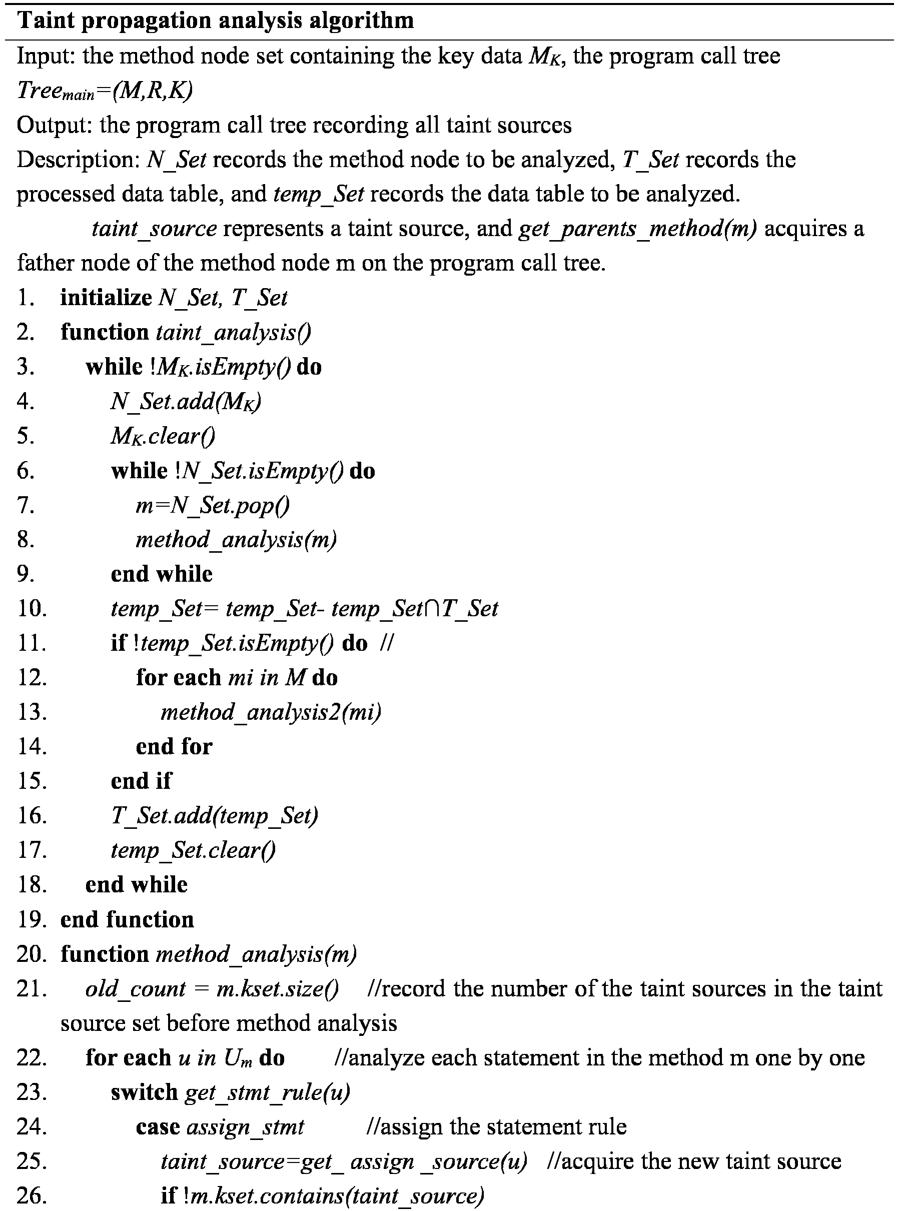

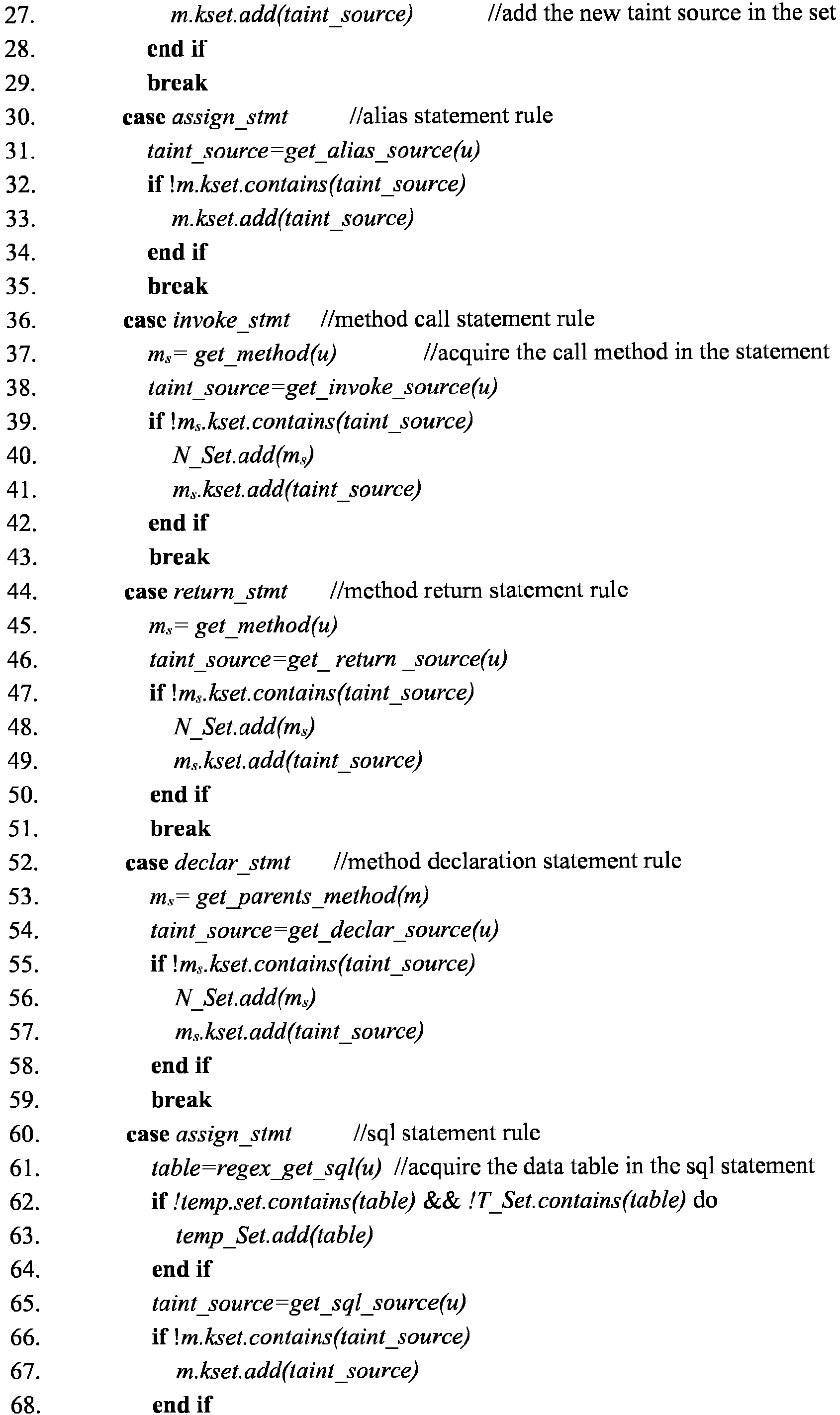

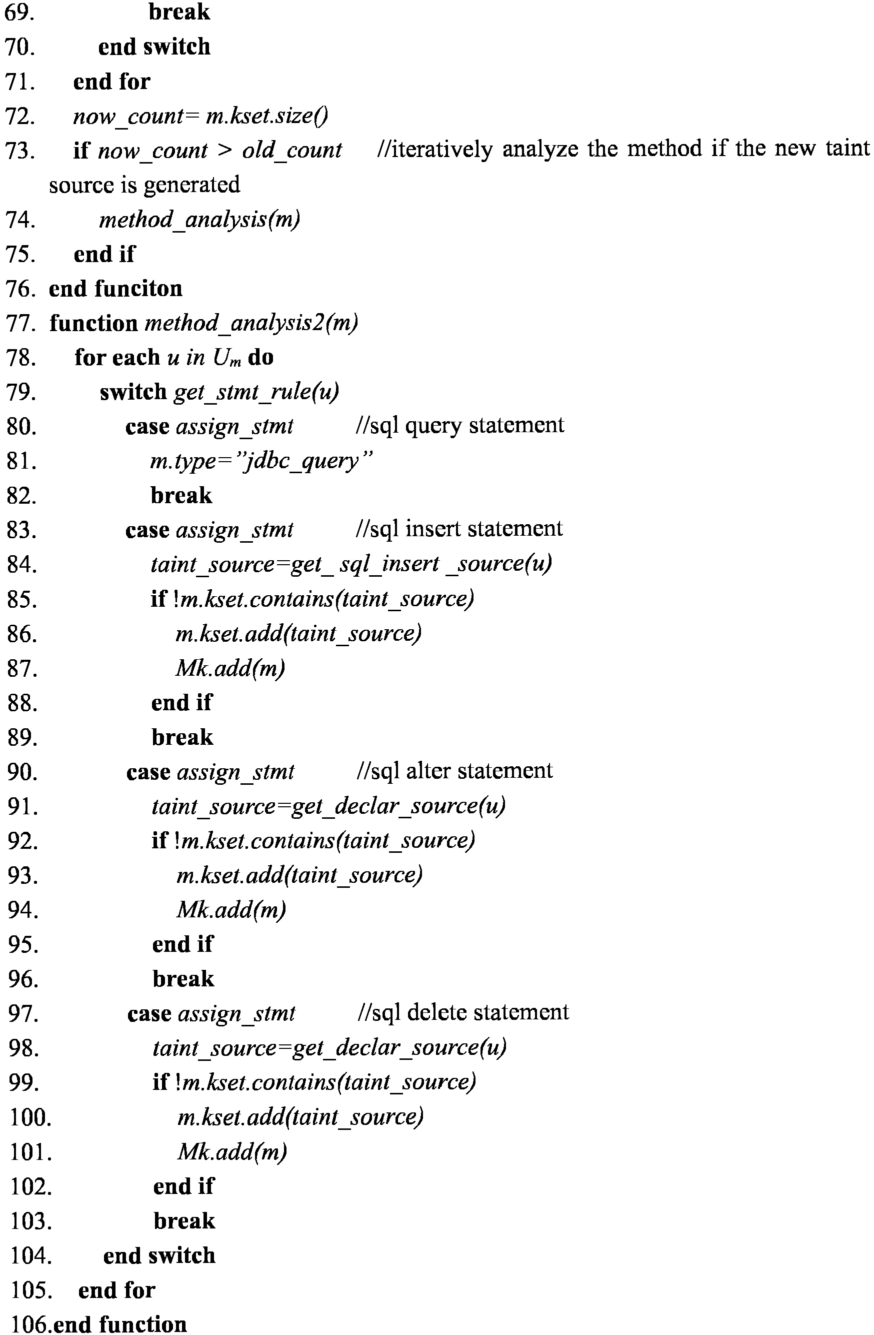

### Step 3:

### 3.1 Key module identification

The key code module is the target objective which achieves adaptive migration from client-server architecture to blockchain architecture, which is an explanation of the key data calling the key code module in the program call tree: when a kset set of a method node m_{cur} is non-empty and a kset set of a father method node thereof is empty, a sub-tree with m_{cur} as a root node is taken as a key code module of the application. A specific definition of the key code module is as follows:

definition 7: the key code module of the application program is represented as *Module=*(*module₁, module₂...moduleₙ*), Module∈ Treeᵣ. *moduleᵢ* is a sub-tree of the Treeₘₐᵢₙ, representing a key code module of the application program, which can be represented as *moduleᵢ=<M,R>* (if *i*≠*j, moduleᵢ*∩*moduleⱼ=*ø).

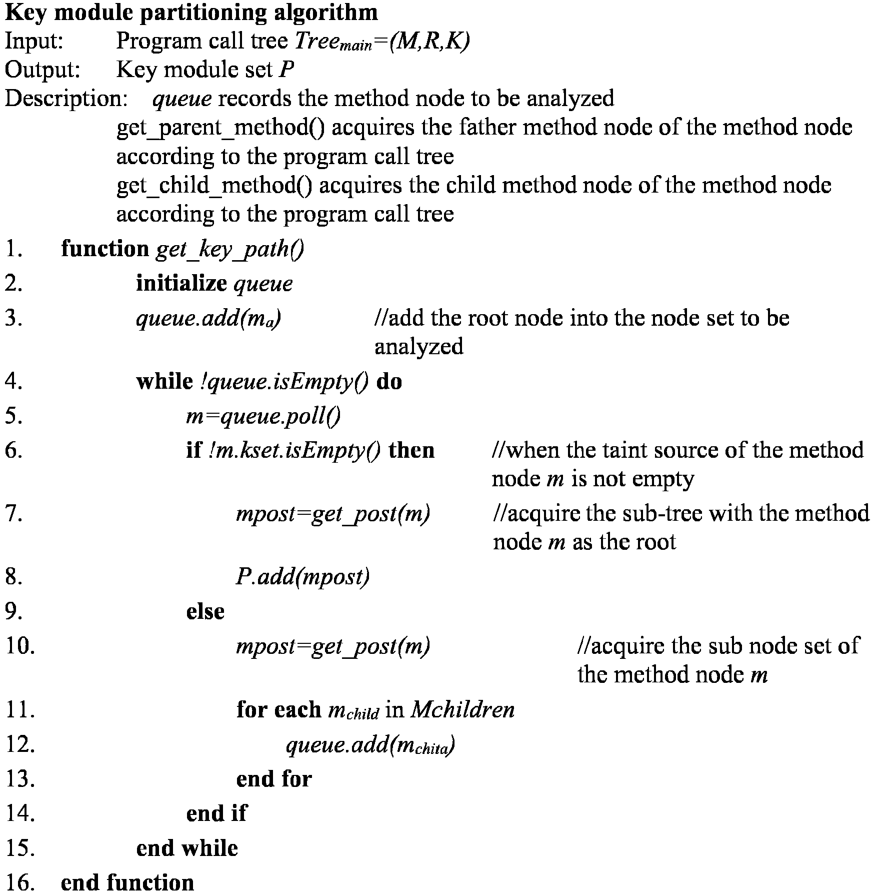

The key module is identified, where first, the root node mₐ is added into a queue of the method node to be analyzed by taking the program call tree as an input and the root node mₐ of the program call tree as an entry; when the queue is not empty, the method node in the queue is acquired, if a taint source of the node method is non-empty, it indicates that a key module is found, and all subsequent nodes all are method nodes in the key module; if the taint source of the node method is empty, all sub-nodes thereof are acquired and the sub-nodes are added into a queue of the nodes to be analyzed; and finally, when the set is empty, the algorithm is ended.

### 3.2 Program structure

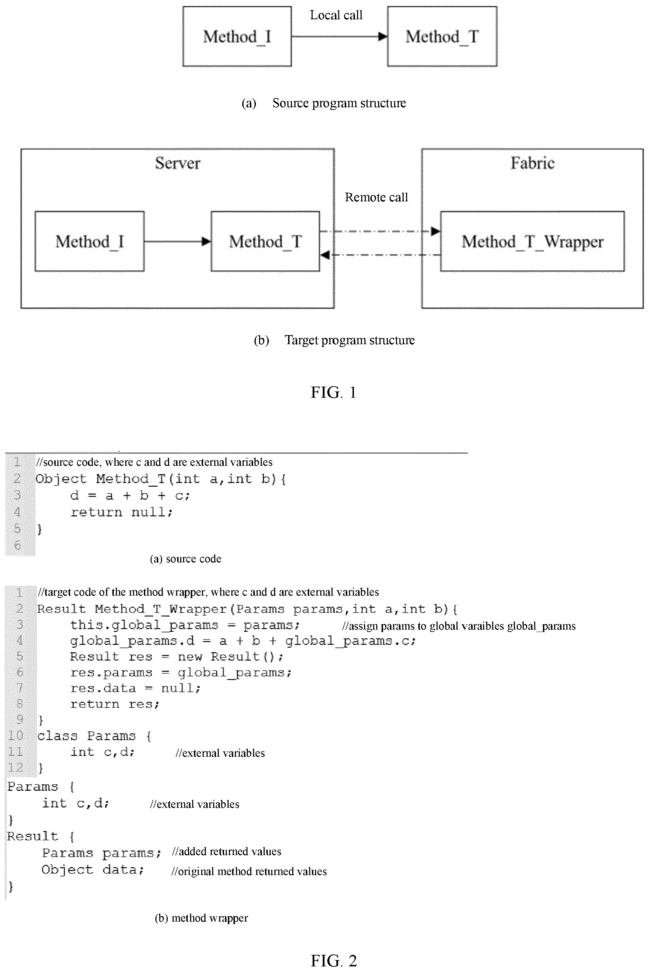

Referring to FIG. 1, structures and calling processes of a native application and a target application are described first.

A core of a target program structure includes two elements: a method wrapper Method_T_Wrapper and a method proxy Method_T_Proxy, where an operating principle of the target program structure is as follows:
(1) direct call of Method_T by Method_I is converted into indirect call via the Method_T_Proxy;
(2) the Method_T_Wrapper completes the function as same as the Method_T, is responsible for executing true computation, transforms the Method_T, finds out external variable references thereof, and transforms the method into a form being introduced through parameters and returned through returned values, and the modified class method is stateless; and
(3) the Method_T_Proxy is a proxy of the method Method_T, and external behaviors thereof are consistent with those of the Method_T, and the proxy does not perform actual computation, is responsible for determining an execution position of the method, and perform controlled forwarding (remote call) and data synchronism (including: initializing and serializing the actual parameter data needed to execute the method wrapper, and deserializing the returned values of the method wrapper to update corresponding local variables).

### 3.3 Method wrapper

The method wrapper is generated by the following steps:
(1) A parameter list and returned values of the method are modified. As shown in (a) in FIG. 2 and the 2nd line of (b) in FIG. 2, the parameters params are increased, representing the external variables of the original method, where the external variables are introduced into a method body in a form of parameters; the statements increased to assign the parameters params to global variables global_params, where all methods in the key module are capable to call external variables of the methods; and moreover, the global_params are added into a returned result, and are capable to return a change condition of the external variables to a method caller; moreover, the global_params are added into the returned result, where the change condition of the external variables can be returned to the method caller;
(2) all statements access to the external variables in the method are modified, as shown in the line 3 of (a) in FIG. 2 and the line 6 of (b) in FIG. 2, the external variable references c and d are replaced with corresponding input parameters global_params.c and global_params.d, where there are no statements access to the external variables in the method; and
(3) all return statements of the method are modified, as shown in the line 4 of (a) in FIG. 2 and the lines 7-10 of (b) in FIG. 2, the parameters global_params are added into the returned result, where the change condition of the external variables can be returned to the method caller.

### 3.4 Method proxy

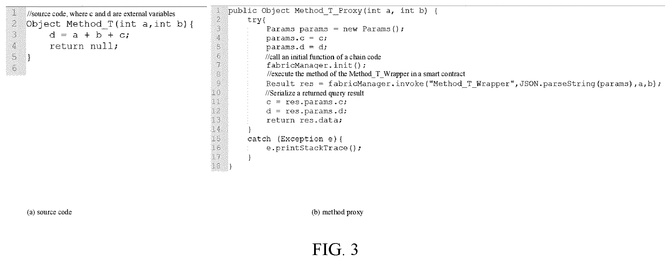

A construction rule for the method proxy is as follows:
(1) a method signature (name and parameter list) and a return type of the method proxy are kept consistent with those of the original method;
(2) statements are increased for processing extra variables; a variable params of a Params type is constructed, and the params are assigned with external variable information of the method;
(3) statements are increased to call the method wrapper in a fabric chain code; in a Hyperledger Fabric, a Java application can use Fabric-Sdk-Java to achieve access to the chain code, the method wrapper in the chinacode is called through a fabricManager object provided by sdk, and moreover, call parameters of the method wrapper are sent; and
(4) the returned results called are increased by a statement receiving method, where the external variables of the method are updated by using result data to guarantee the consistency of the program state, as shown in lines 11-12 in FIG. 3; Moreover, a method call returned value is returned to the caller thereof, as shown in line 13 in FIG. 3.

### 3.5 JDBC refactoring

The application program usually uses a relationship database, a relationship table structure needs to be defined first for use of the application program, and then related business codes of the application program edited through JDBC API. A database operating node is an SQL statement in the node, a function of the database is operated through the JDBC API, and the statement is usually a landing point or a start point of the key data in the propagation path.

Because most databases of blockchain use key value databases and do not support SQL operation, the JDBC API is needed to be converted into a key value of a corresponding blockchain to operate API for the database in refactoring, where a current mainstream open source blockchain architecture Fabric chaincode is targeted.

The Fabric chaincode uses a Couch DB key value database, and a refactoring method includes analysis and verification of the SQL statement and operational conversion from the SQL statement to CouchDB.

### Experimental evaluation

To verify validness and feasibility of the method, the method herein is experimentally evaluated. 10 web open source applications are collected from github and a joint development network, with an experimental environment shown as follows:

| Tool name | Edition number | Description |
|---|---|---|
| hyperledger fabric | 2.2.5 | Hyperledger |
| docker | 20.10.20 | Containerized management tool |
| docker-compose | 1.24.1 | Containerized deployment tool |
| java | 1.8.0 | Programming language |

Application performance comparison: by comparing the blockchain application reconstructed by the method with the blockchain application developed by a professional in performance, the read-write performance of the application is mainly evaluated. An Apache organizes a pressure test tool Apache JMeter developed based on Java to test the pressure of the Web application, and a test index is transactions per second (tps). Two solutions of each system are subjected to 10-time pressure tests, and a mean value is taken. An experimental result shows that the performance loss is within 8% while the development efficiency of the blockchain application is improved when the blockchain application is developed by using the framework.

| | Native solution | The method | |
|---|---|---|---|
| Ideal crowdfunding system | 39.6 | 37.0 | 6.57% |
| Lottery system | 41.4 | 38.5 | 7.00% |
| Electronic invoice cloud platform | 53.2 | 50.1 | 5.82% |
| Agricultural product traceability system | 52.2 | 48.9 | 6.32% |
| Electronic certificate | 50.4 | 47.5 | 5.75% |
| Electronic medical system | 53.8 | 49.2 | 8.92% |
| Food traceability system | 51.9 | 48.9 | 5.78% |
| Second-hand car trading system | 40.0 | 36.7 | 8.35% |
| House renting system | 40.8 | 38.6 | 5.39% |
| Drug tracing | 53.9 | 49.5 | 8.16% |

## Claims

1. An application migration method from client-server architecture to blockchain architecture, comprising the following steps: S1: modeling an application program of a conventional client-server architecture and abstracting the application to a program call tree; S2: defining a taint propagation rule for taint analysis by taking key data as tainted data, to acquire all taint variables in an application program; and S3: identifying a key module of the application program on the program call tree according to a tainted path, and setting a code refactoring rule to perform code refactoring on a method in the key module according to a core of a target program structure;
wherein the S1 specifically comprises: establishing the program call tree, constructing the program call tree of the whole program from the main function through static code analysis, and marking the key data on the program call tree; and definitions of the program call tree are as follows:
definition 1: the program structure of an application program of client-server architecture is represented as a program call tree *Treeᵣ=*(*M, R, K),* where *M*= *m₁, m₂, ..., mₙ*} represents a node set of the program call tree; R represents a node call relationship set, any one *rₘᵢ₋ₘⱼ* ∈*R* represents a side of the program call tree, representing that a method *mᵢ* calls a method *mⱼ*; and *K*={*keydata₁, keydata₂,* ... *,keydataₙ*} represents a key data set in a system;
definition 2: a method node of a program call tree comprises a unique identifier and a call path of the method, a statement set of the method and a set of the key data in the method, and *mᵢ=<mSignᵢ, mPath, Uᵢ, kset >* is represented by a quaternion, where *mSign* represents the unique identifier of the method *mᵢ*, *mPath* represents a method call path from the main function to *mᵢ*, *kset* is used to record all key data in the method *mᵢ*, and *Uᵢ* represents the statement set of the method *mᵢ*;
definition 3: *mSignᵢ=*{*mSig*|*mName,mParams,returnParams*} represents the unique identifier of a method node of a program call tree, where *mName* represents a method name, *mParams* represents an entry parameter list of the method, and *returnParams* represents return parameters of the method;
definition 4: *mPath=*{*mSigₘₐᵢₙ*,*mSigₐ*,...,*mSigᵢ*} represents the call path of a program call tree method *mᵢ*, a combination of the unique identifiers of the method node from *mₘₐᵢₙ* to *mᵢ*, uniquely forming a path accessible to *mᵢ*;
definition 5: ${U}_{i} = \left\{{u}_{i}^{1},{u}_{i}^{2},…,{u}_{i}^{n}\right\}$ represents the statement set of the method node *mᵢ* on the program call tree, where ${u}_{i}^{j}$ represents the *j*^{th} statement of the method *mᵢ*; and
definition 6: the key data of a system comprises the unique identifier of the key data in the method and a key data name, and *eydataᵢ=*{*mSignᵢ, kname*} is represented by a two-tuple, where *kname* represents a variable in the method *mᵢ* with a name of *kname,* and variables on a data flow branch where all key data is located may be key variables;
wherein an algorithm extracted by the program call tree constructs a program call tree of an application taking *mₘₐᵢₙ* as a root by taking the main function *mₘₐᵢₙ* as an entry point of the application, a HashMap is used to record a R, a storage form of key is *<mᵢ*, *mⱼ*>, formula represents that *mᵢ* calls *mⱼ*, and a value corresponding thereto represents a number of times when *mᵢ* calls *mⱼ*; for the entry point *mₘₐᵢₙ* of the input program of the algorithm and the statement set *Uₘₐᵢₙ* of *mₘₐᵢₙ*, any ${u}_{main}^{i} ∈ {U}_{main}$ represents the i^{th} statement of *Uₘₐᵢₙ*; the program call tree is constructed recursively by calling a method getTree(), where parameters mₐ and Uₐ are written into the method, respectively representing a method to be analyzed and the statement set of the method; wherein a Soot key word of ${u}_{a}^{i}$ is acquired, i.e., an intermediate code defined in Soot; a set *M* is updated to record that the method *mₐ* calls the method *mₛ*; a set R is updated to record a method call relationship and update a weight; the method *mₛ* is subjected to getTree() recursion; and when the recursion process is ended, the algorithm outputs the program call tree;
wherein the assignment statement rule and the alias statement rule in the taint propagation rule in the S2 summarize the various ways of the taint variables propagation in a method; a method call statement rule, a method return statement rule and a method declaration statement rule describe cross-method propagation modes of the taint variables; first, for each method node containing the key data, each statement in the method is analyzed according to the taint propagation rule, and when the statement meets any taint propagation rule, it is indicated that a new taint source is found, and the new taint source is added into a taint source set for recording; wherein when the statement meets the method call statement rule, the method return statement rule or the method declaration statement rule, it is indicated that a new method node to be analyzed is generated, and the method node needs to be added into a set of the method node to be analyzed for recording; after a round of analysis of all statements of the method is ended, if the new taint source is added into the taint source set, a new round of iteration is started to analyze the method; and finally, the set of the method node to be analyzed is traversed to analyze each method node in the set one by one;
wherein the S3 comprises key module identification, program structure and method wrapper generation, method proxy construction and Java Data Base Connectivity, JDBC, refactoring;
wherein the application for JDBC refactoring uses a relationship database, a relationship table structure needs to be defined first for use of the application, and then related business codes of the application edited through JDBC API; a database operating node is an SQL statement in the node, a function of the database is operated through the JDBC API, and the statement is usually a landing point or a start point of the key data in the propagation path; the JDBC API is converted into a key value of a corresponding blockchain to operate API for the database, where a current mainstream open source blockchain architecture Fabric chaincode is targeted; and the Fabric chaincode uses a Couch DB key value database, and a refactoring method comprises analysis and verification of the SQL statement and operational conversion from the SQL statement to CouchDB.

2. The application migration method from client-server architecture to blockchain architecture according to claim 1, wherein the step of key module identification specifically comprises: when a kset set of a method node m_{cur} is non-empty and a kset set of a father method node thereof is empty, taking a sub-tree with m_{cur} as a root node as a key code module of the application, wherein the key code module is specifically defined as follows:
definition 7: the key code module of the application program is represented as *Module=*(*module₁, module₂...moduleₙ*), Module∈ Treeᵣ, where *moduleᵢ* is a sub-tree of Treeₘₐᵢₙ, representing a key code mode of the application program and being represented as *moduleᵢ=*<*M*,*R*>(if *i*≠*j, moduleᵢ*∩*moduleⱼ*=ø); identifying the key module: first, adding the root node *mₐ* into a queue of the method node to be analyzed by taking the program call tree as an input and the root node mₐ of the program call tree as an entry; when the queue is not empty, acquiring the method node in the queue, if a taint source of the node method is non-empty, indicating that a key module is found, and all subsequent nodes all are method nodes in the key module; if the taint source of the node method is empty, acquiring all sub-nodes thereof and adding the sub-nodes into a queue of the nodes to be analyzed; and finally, when the set is empty, ending the algorithm.

3. The application migration method from client-server architecture to blockchain architecture according to claim 1, wherein structures and calling processes of a native application and a target application are described first;
the core of the target program structure comprises two elements: a method wrapper Method_T_Wrapper and a method proxy Method_T_Proxy, wherein an operating principle of the target program structure is as follows: direct call of Method_T by Method_I is converted into indirect call via the Method_T_Proxy; the Method_T_Wrapper completes the function as same as the Method_T, is responsible for executing true computation, transforms the Method_T, finds out external variable references thereof, and transforms the method into a form being introduced through parameters and returned through returned values, and the modified class method is stateless; the Method_T_Proxy is a proxy of the method Method_T, and external behaviors thereof are consistent with those of the Method_T, and the proxy does not perform actual computation, is responsible for determining an execution position of the method, and perform controlled forwarding and data synchronism.

4. The application migration method from client-server architecture to blockchain architecture according to claim 1, wherein the method wrapper is generated by the following steps:
modifying the parameter list and the returned values of the method; increasing the parameters params, representing the external variables of the original method, wherein the external variables are introduced into a method body in a form of parameters; increasing the statements to assign the parameters params to global variables global_params, wherein all methods in the key module are capable to call external variables of the methods; and moreover, adding the global_params into a returned result, and being capable to return a change condition of the external variables to a method caller;
modifying all statements access to the external variables in the method, replacing the external variable references c and d with corresponding input parameters global_params.c and global_params.d, wherein there are no statements access to the external variables in the method; and
modifying all return statements of the method, adding the parameters global_params into the returned result, wherein the change condition of the external variables can be returned to the method caller.

5. The application migration method from client-server architecture to blockchain architecture according to claim 1, wherein a construction rule for the method proxy is as follows:
keeping a method signature and a return type of the method proxy consistent with those of the original method;
increasing the statements for processing extra variables; constructing a variable params of a Params type, and assigning the params with external variable information of the method;
increasing the statements to call the method wrapper in a fabric chain code; in a Hyperledger Fabric, calling the method wrapper Method_T_Wrapper in the chain code through a fabricManager object provided by sdk, and moreover, sending call parameters of the method wrapper; and
increasing the returned results called by a statement receiving method, wherein the external variables of the method are updated by using result data to guarantee the consistency of the program state, and moreover, returning a method call returned value to the caller thereof.

## Patentansprüche

1. Anwendungsmigrationsverfahren von einer Client-Server-Architektur zu einer Blockchain-Architektur, umfassend die folgenden Schritte: S1: Modellieren eines Anwendungsprogramms einer herkömmlichen Client-Server-Architektur und Abstrahieren der Anwendung zu einem Programm-Aufrufbaum; S2: Definieren einer Taint-Propagierungsregel für eine Taint-Analyse durch Verwenden von Schlüsseldaten als Taint-Daten, um alle Taint-Variablen in dem Anwendungsprogramm zu erfassen; und S3: Identifizieren eines Schlüsselmoduls des Anwendungsprogramms auf dem Programm-Aufrufbaum gemäß einem Taint-Pfad, und Festlegen einer Code-Refactoring-Regel, um ein Code-Refactoring an einer Methode in dem Schlüsselmodul gemäß einem Kern einer Zielprogrammstruktur durchzuführen;
wobei S1 spezifisch Folgendes umfasst: Erstellen des Programm-Aufrufbaums, Konstruieren des Programm-Aufrufbaums des gesamten Programms aus der Hauptfunktion durch eine statische Codeanalyse, und Markieren der Schlüsseldaten auf dem Programm-Aufrufbaum; und wobei Definitionen des Programm-Aufrufbaums wie folgt sind:
Definition 1: die Programmstruktur eines Anwendungsprogramms der Client-Server-Architektur wird als ein Programm-Aufrufbaum *Treeᵣ = (M, R, K)* dargestellt, wobei *M = {m₁, m₂, ... , mₙ*} eine Knotenmenge des Programm-Aufrufbaums darstellt; *R* eine Knotenaufruf-Beziehungsmenge darstellt, wobei ein beliebiges *rₘᵢ₋ₘⱼ* ∈ *R* eine Kante des Programm-Aufrufbaums darstellt, was darstellt, dass eine Methode *mᵢ* eine Methode *mⱼ* aufruft, und *K = {keydata₁, keydata₂, ... , keydataₙ*} eine Schlüsseldatenmenge in einem System darstellt;
Definition 2: ein Methodenknoten des Programm-Aufrufbaums umfasst eine eindeutige Kennung und einen Aufrufpfad der Methode, eine Anweisungsmenge der Methode und eine Menge der Schlüsseldaten in der Methode, und *mᵢ = <mSignᵢ, mPath, Uᵢ, kset>* wird durch ein Quaternion dargestellt, wobei *mSign* die eindeutige Kennung der Methode *mᵢ* darstellt, *mPath* einen Methodenaufrufpfad von der Hauptfunktion zu *mᵢ* darstellt, *kset* verwendet wird, um alle Schlüsseldaten in der Methode *mᵢ* aufzuzeichnen, und *Uᵢ* die Anweisungsmenge der Methode *mᵢ* darstellt,
Definition 3: *mSignᵢ = {mSig*|*mName, mParams, returnParams}* stellt die eindeutige Kennung eines Methodenknotens des Programm-Aufrufbaums dar, wobei *mName* einen Methodennamen darstellt, *mParams* eine Eingangsparameterliste der Methode darstellt, und *returnParams* Rückgabeparameter der Methode darstellt;
Definition 4: *mPath = {mSigₘₐᵢₙ, mSigₐ, ..., mSigᵢ}* stellt den Aufrufpfad der Methode *mᵢ* des Programm-Aufrufbaums dar, eine Kombination der eindeutigen Kennungen des Methodenknotens von *mₘₐᵢₙ* zu *mᵢ*, die eindeutig einen für *mᵢ* zugänglichen Pfad bildet,
Definition 5: ${U}_{i} = \left\{{u}_{i}^{1}, {u}_{i}^{2}, …, {u}_{i}^{n}\right\}$ stellt die Anweisungsmenge des Methodenknotens *mᵢ* auf dem Programm-Aufrufbaum dar, wobei ${u}_{i}^{j}$ di*e j-te* Anweisung der Methode *mᵢ* darstellt, und
Definition 6: die Schlüsseldaten des Systems umfassen die eindeutige Kennung der Schlüsseldaten in der Methode und einen Schlüsseldatennamen, und *keydataᵢ = {mSignᵢ, kname}* wird durch ein 2-Tupel dargestellt, wobei *kname* eine Variable in der Methode *mᵢ* mit einem Namen von *kname* darstellt, und Variablen auf einem Datenflusszweig, wo sich alle Schlüsseldaten befinden, Schlüsselvariablen sein können;
wobei ein durch den Programm-Aufrufbaum extrahierter Algorithmus den Programm-Aufrufbaum einer Anwendung konstruiert, die *mₘₐᵢₙ* als eine Wurzel nimmt, indem die Hauptfunktion *mₘₐᵢₙ* als ein Einsprungspunkt der Anwendung genommen wird, wobei eine HashMap verwendet wird, um das R aufzuzeichnen, wobei eine Speicherform des Schlüssels <*mᵢ*, *mⱼ*> ist, wobei die Formel darstellt, dass *mᵢ mⱼ* aufruft, und ein entsprechend dazu gehörender Wert eine Anzahl der Male darstellt, wenn *mᵢ mⱼ* aufruft, wobei für den Einsprungspunkt *mₘₐᵢₙ* des Eingabeprogramms des Algorithmus und die Anweisungsmenge *Uₘₐᵢₙ* von *mₘₐᵢₙ* ein beliebiges ${u}_{main}^{i} ∈ {U}_{main}$ die i-te Anweisung von *Uₘₐᵢₙ* darstellt; der Programm-Aufrufbaum durch Aufrufen einer Methode getTree() rekursiv konstruiert wird, wobei die Parameter mₐ und Uₐ in die Methode geschrieben werden, die jeweils die zu analysierende Methode und die Anweisungsmenge der Methode darstellen; wobei das Soot-Schlüsselwort von ${u}_{a}^{i}$ erfasst wird, d.h., ein in Soot definierter Zwischencode; die Menge *M* aktualisiert wird, um aufzuzeichnen, dass die Methode *mₐ* die Methode *mₛ* aufruft; die Menge R aktualisiert wird, um die Methodenaufrufbeziehung aufzuzeichnen und eine Gewichtung zu aktualisieren; die Methode *mₛ* einer getTree()-Rekursion unterzogen wird; und wenn der Rekursionsprozess beendet ist, der Algorithmus den Programm-Aufrufbaum ausgibt;
wobei die Zuweisungsanweisungsregel und die Aliasanweisungsregel in der Taint-Propagierungsregel in S2 die verschiedenen Wege der Propagierung der Taint-Variablen in einer Methode zusammenfassen; eine Methodenaufrufanweisungsregel, eine Methodenrückgabeanweisungsregel und eine Methodendeklarationsanweisungsregel methodenübergreifende Propagierungsmodi der Taint-Variablen beschreiben; zuerst, für jeden Methodenknoten, der die Schlüsseldaten enthält, jede Anweisung in der Methode gemäß der Taint-Propagierungsregel analysiert wird, und wenn die Anweisung eine beliebige Taint-Propagierungsregel erfüllt, dies anzeigt, dass eine neue Taint-Quelle gefunden ist, und die neue Taint-Quelle in eine Taint-Quellenmenge zur Aufzeichnung hinzugefügt wird; wobei, wenn die Anweisung die Methodenaufrufanweisungsregel, die Methodenrückgabeanweisungsregel oder die Methodendeklarationsanweisungsregel erfüllt, dies anzeigt, dass ein neuer zu analysierender Methodenknoten generiert wird, und der Methodenknoten in eine Menge der zu analysierenden Methodenknoten zur Aufzeichnung hinzugefügt werden muss; nachdem eine Analyserunde aller Anweisungen der Methode beendet ist, wenn die neue Taint-Quelle in die Taint-Quellenmenge hinzugefügt ist, eine neue Iterationsrunde gestartet wird, um die Methode zu analysieren; und schließlich die Menge der zu analysierenden Methodenknoten durchlaufen wird, um jeden Methodenknoten in der Menge einzeln zu analysieren;
wobei S3 Schlüsselmodulidentifikation, Erzeugung von Programmstruktur und Methoden-Wrapper, Methoden-Proxy-Konstruktion und Java-Datenbankkonnektivitäts-, JDBC, -Refactoring umfasst;
wobei die Anwendung für JDBC-Refactoring eine relationale Datenbank verwendet, wobei eine Beziehungstabellenstruktur zuerst für die Verwendung der Anwendung definiert werden muss, und dann zugehörige Geschäftscodes der Anwendung durch die JDBC-API bearbeitet werden; ein Datenbankoperationsknoten eine SQL-Anweisung in dem Knoten ist, eine Funktion der Datenbank durch die JDBC-API betrieben wird, und die Anweisung üblicherweise ein Landepunkt oder ein Startpunkt der Schlüsseldaten im Propagierungspfad ist; die JDBC-API in einen Schlüsselwert einer entsprechenden Blockchain umgewandelt wird, um eine API für die Datenbank zu betreiben, wobei ein Fabric-Chaincode einer derzeit gängigen Open-Source-Blockchain-Architektur als Ziel gesetzt wird; und der Fabric-Chaincode eine Couch-DB-Schlüsselwertdatenbank verwendet, und ein Refactoring-Verfahren eine Analyse und Verifizierung der SQL-Anweisung und eine operative Umwandlung von der SQL-Anweisung zu CouchDB umfasst.

2. Anwendungsmigrationsverfahren von einer Client-Server-Architektur zu einer Blockchain-Architektur nach Anspruch 1, wobei der Schritt der Schlüsselmodulidentifikation spezifisch Folgendes umfasst: wenn eine kset-Menge eines Methodenknotens *m_{cur}* nicht leer ist und eine kset-Menge eines Elternmethodenknotens davon leer ist, Nehmen eines Teilbaums mit *m_{cur}* als Wurzelknoten als ein Schlüsselcodemodul der Anwendung, wobei das Schlüsselcodemodul spezifisch wie folgt definiert ist:
Definition 7: das Schlüsselcodemodul des Anwendungsprogramms wird als Module = (*module₁, module₂ ... moduleₙ*), Module ∈ Treeᵣ dargestellt, wobei *moduleᵢ* ein Teilbaum von Treeₘₐᵢₙ ist, der einen Schlüsselcodemodus des Anwendungsprogramms darstellt und als *moduleᵢ = <M, R> (wenn i ≠ j, moduleᵢ* ∩ *moduleⱼ =* ∅*)* dargestellt wird, Identifizieren des Schlüsselmoduls: zuerst, Hinzufügen des Wurzelknotens mₐ in eine Warteschlange der Methodenknoten, die zu analysieren sind, indem der Programm-Aufrufbaum als eine Eingabe und der Wurzelknoten mₐ des Programm-Aufrufbaums als ein Eintrag genommen werden; wenn die Warteschlange nicht leer ist, Erfassen des Methodenknotens in der Warteschlange, wenn eine Taint-Quelle der Knotenmethode nicht leer ist, was anzeigt, dass ein Schlüsselmodul gefunden ist, und alle nachfolgenden Knoten alle Methodenknoten in dem Schlüsselmodul sind; wenn die Taint-Quelle der Knotenmethode leer ist, Erfassen aller Unterknoten davon und Hinzufügen der Unterknoten in eine Warteschlange der zu analysierenden Knoten; und schließlich, wenn die Menge leer ist, Beenden des Algorithmus.

3. Anwendungsmigrationsverfahren von einer Client-Server-Architektur zu einer Blockchain-Architektur nach Anspruch 1, wobei Strukturen und Aufrufprozesse einer nativen Anwendung und einer Zielanwendung zuerst beschrieben werden;
der Kern der Zielprogrammstruktur zwei Elemente umfasst: einen Methoden-Wrapper Method_T_Wrapper und einen Methoden-Proxy Method_T_Proxy, wobei ein Betriebsprinzip der Zielprogrammstruktur wie folgt ist: ein direkter Aufruf von Method_T durch Method_I in einen indirekten Aufruf über den Method_T_Proxy umgewandelt wird; der Method_T_Wrapper die Funktion genauso wie die Method_T ausführt, für das Ausführen einer tatsächlichen Berechnung verantwortlich ist, die Method_T transformiert, externe Variablenreferenzen davon herausfindet, und die Methode in eine Form transformiert, die durch Parameter eingeführt und durch Rückgabewerte zurückgegeben wird, und die modifizierte Klassenmethode zustandslos ist; der Method_T_Proxy ein Proxy der Methode Method_T ist, und externes Verhalten davon konsistent mit dem der Method_T ist, und der Proxy keine tatsächliche Berechnung durchführt, für das Bestimmen einer Ausführungsposition der Methode verantwortlich ist, und eine kontrollierte Weiterleitung und eine Datensynchronisation durchführt.

4. Anwendungsmigrationsverfahren von einer Client-Server-Architektur zu einer Blockchain-Architektur nach Anspruch 1, wobei der Methoden-Wrapper durch die folgenden Schritte erzeugt wird:
Modifizieren der Parameterliste und der Rückgabewerte der Methode; Hinzufügen der Parameter params, die die externen Variablen der ursprünglichen Methode darstellen, wobei die externen Variablen in einen Methodenkörper in einer Form von Parametern eingeführt werden; Hinzufügen der Anweisungen, um die Parameter params zu globalen Variablen global_params zuzuweisen, wobei alle Methoden in dem Schlüsselmodul in der Lage sind, externe Variablen der Methoden aufzurufen; und darüber hinaus Hinzufügen der global_params in ein zurückgegebenes Ergebnis, und in der Lage zu sein, eine Änderungsbedingung der externen Variablen an einen Methodenaufrufer zurückzugeben;
Modifizieren aller Anweisungszugriffe auf die externen Variablen in der Methode, Ersetzen der externen Variablenreferenzen c und d durch entsprechende Eingangsparameter global_params.c und global_params.d, wobei es keinen Anweisungszugriff auf die externen Variablen in der Methode gibt; und
Modifizieren aller Rückgabeanweisungen der Methode, Hinzufügen der Parameter global_params in das zurückgegebene Ergebnis, wobei die Änderungsbedingung der externen Variablen an den Methodenaufrufer zurückgegeben werden kann.

5. Anwendungsmigrationsverfahren von einer Client-Server-Architektur zu einer Blockchain-Architektur nach Anspruch 1, wobei eine Konstruktionsregel für den Methoden-Proxy wie folgt ist:
Beibehalten einer Methodensignatur und eines Rückgabetyps des Methoden-Proxys konsistent mit denen der ursprünglichen Methode;
Hinzufügen der Anweisungen zum Verarbeiten von zusätzlichen Variablen; Konstruieren einer Variable params eines Params-Typs, und Zuweisen der params mit externen Variableninformationen der Methode;
Hinzufügen der Anweisungen, um den Methoden-Wrapper in einem Fabric-Chaincode aufzurufen; in einer Hyperledger Fabric, Aufrufen des Methoden-Wrappers Method_T_Wrapper in dem Chaincode durch ein von einem sdk bereitgestelltes fabricManager-Objekt, und darüber hinaus Senden von Aufrufparametern des Methoden-Wrappers; und
Hinzufügen der zurückgegebenen Ergebnisse, die durch eine Anweisungsempfangsmethode aufgerufen werden, wobei die externen Variablen der Methode unter Verwendung von Ergebnisdaten aktualisiert werden, um die Konsistenz des Programmzustands zu garantieren, und darüber hinaus, Zurückgeben eines Methodenaufruf-Rückgabewerts an den Aufrufer davon.

## Revendications

1. Procédé de migration d'application d'une architecture client-serveur à une architecture de chaîne de blocs, comprenant les étapes suivantes : S1 : modélisation d'un programme d'application d'une architecture client-serveur classique et abstraction de l'application à un arbre d'appel de programme ; S2 : définition d'une règle de propagation d'altération pour une analyse d'altération en prenant des données clés en tant que données d'altération, pour acquérir toutes les variables d'altération dans un programme d'application ; et S3 : identification d'un module clé du programme d'application sur l'arbre d'appel de programme en fonction d'un trajet altéré, et définition d'une règle de refactorisation de code pour effectuer une refactorisation de code sur un procédé dans le module clé en fonction d'un noyau d'une structure de programme cible ;
dans lequel S1 comprend spécifiquement : établissement de l'arbre d'appel de programme, construction de l'arbre d'appel de programme de l'ensemble du programme à partir de la fonction principale par l'intermédiaire d'une analyse de code statique, et marquage des données clés sur l'arbre d'appel de programme ; et les définitions de l'arbre d'appel de programme sont comme suit :
définition 1 : la structure de programme d'un programme d'application avec une architecture client-serveur est représentée comme un appel de programme *Treeᵣ=(M,R,K)*, où *M={m₁,m₂,... ,mₙ*} représente un ensemble de nœuds de l'arbre d'appel de programme ; *R* représente un ensemble de relations d'appel de nœud, chaque *rₘᵢ₋ₘⱼ*∈*R* représente un côté de l'arbre d'appel de programme, représentant qu'un procédé *mᵢ* appelle un procédé *mⱼ* ; et *K={keydata₁, keydata₂, ... ,keydataₙ*} représente un ensemble de données clés dans un système ;
définition 2 : un nœud de procédé d'un arbre d'appel de programme comprend un identifiant unique et un trajet d'appel du procédé, un ensemble d'instructions du procédé et un ensemble des données clés dans le procédé, et *mᵢ=<mSignᵢ, mPath, Uᵢ, kset>* est représenté par un quaternion, où *mSign* représente l'identifiant unique du procédé *mᵢ*, *mPath* représente un trajet d'appel de procédé de la fonction principale à *mᵢ*, *kset* est utilisé pour enregistrer toutes les données clés dans le procédé *mᵢ*, et *Uᵢ* représente l'ensemble d'instructions du procédé *mᵢ,*
définition 3 : *mSignᵢ = {mSig*|*mName,mParams,returnParams}* représente l'identifiant unique d'un nœud de procédé d'un arbre d'appel de programme, où *mName* représente un nom de procédé, *mParams* représente une liste de paramètres d'entrée du procédé, et *returnParams* représente des paramètres de retour du procédé ;
définition 4 : *mPath={mSigₘₐᵢₙ,mSigₐ,...,mSigᵢ}* représente le chemin d'appel d'un procédé d'arbre d'appel de programme *mᵢ*, une combinaison des identifiants uniques du nœud de procédé de *mₘₐᵢₙ* à *mᵢ*, formant de manière unique un chemin accessible à *mᵢ*,
définition 5 : ${U}_{i} = \left\{{u}_{i}^{1}, {u}_{i}^{2},…, {u}_{i}^{n}\right\}$ représente l'ensemble d'instructions du nœud de procédé *mᵢ* sur l'arbre d'appel de programme, où ${u}_{i}^{j}$ représente la j^{ème} instruction du procédé *mᵢ*, et
définition 6 : les données clés d'un système comprennent l'identifiant unique des données clés dans le procédé et un nom de données clés, et *keydataᵢ={mSignᵢ,kname}* est représenté par un deux-uplets, où *kname* représente une variable dans le procédé *mᵢ* avec un nom de *kname*, et des variables sur une branche de flux de données où toutes les données clés sont situées peuvent être des variables clés ;
dans lequel un algorithme extrait par l'arbre d'appel de programme construit un arbre d'appel de programme d'une application prenant *mₘₐᵢₙ* en tant que racine en prenant la fonction principale *mₘₐᵢₙ* en tant que point d'entrée de l'application, un HashMap est utilisé pour enregistrer un R, une forme de stockage de clé est <*mᵢ*, *mⱼ*>, la formule représente que *mᵢ* appelle *mⱼ*, et une valeur correspondant à celle-ci représente un nombre de fois où *mᵢ* appelle *mⱼ*, pour le point d'entrée *mₘₐᵢₙ* du programme d'entrée de l'algorithme et l'ensemble d'instructions *Uₘₐᵢₙ* de *mₘₐᵢₙ*, chaque ${u}_{main}^{i} ∈ {U}_{main}$ représente la i^{ème} instruction de *Uₘₐᵢₙ* ; l'arbre d'appel de programme est construit de manière récursive en appelant un procédé getTree(), où des paramètres mₐ et Uₐ sont écrits dans le procédé, représentant respectivement un procédé à analyser et l'ensemble d'instructions du procédé ; dans lequel un mot clé Soot de ${u}_{a}^{i}$ est acquis, c'est-à-dire un code intermédiaire défini dans Soot ; un ensemble *M* est mis à jour pour enregistrer que le procédé *mₐ* appelle le procédé *mₛ* ; un ensemble R est mis à jour pour enregistrer une relation d'appel de procédé et mettre à jour un poids ; le procédé *mₛ* est soumis à une récursion de getTree() ; et lorsque le processus de récursion est terminé, l'algorithme délivre en sortie l'arbre d'appel de programme ;
dans lequel la règle d'instruction d'affectation et la règle d'instruction d'alias dans la règle de propagation d'altération dans S2 résument les diverses façons de la propagation de variables d'altération dans un procédé ; une règle d'instruction d'appel de procédé, une règle d'instruction de retour de procédé et une règle d'instruction de déclaration de procédé décrivent des modes de propagation inter-procédé des variables d'altération ; d'abord, pour chaque nœud de procédé contenant les données clés, chaque instruction dans le procédé est analysée en fonction de la règle de propagation d'altération, et lorsque l'instruction répond à une quelconque règle de propagation d'altération, il est indiqué qu'une nouvelle source d'altération est trouvée, et la nouvelle source d'altération est ajoutée dans un ensemble de sources d'altération pour enregistrement ; dans lequel lorsque l'instruction satisfait la règle d'instruction d'appel de procédé, la règle d'instruction de retour de procédé ou la règle d'instruction de déclaration de procédé, il est indiqué qu'un nouveau nœud de procédé à analyser est généré, et le nœud de procédé doit être ajouté dans un ensemble du nœud de procédé à analyser pour enregistrement ; après qu'un cycle d'analyse de toutes les instructions du procédé est terminé, si la nouvelle source d'altération est ajoutée dans l'ensemble de sources d'altération, un nouveau cycle d'itération est démarré pour analyser le procédé ; et enfin, l'ensemble du nœud de procédé à analyser est parcouru pour analyser un-par-un chaque nœud de procédé dans l'ensemble ;
dans lequel S3 comprend une identification de module clé, une structure de programme et une génération de fonction d'enveloppe de procédé, une construction de mandataire de procédé et une refactorisation de JDBC (Java Data Base Connectivity) ;
dans lequel l'application pour la refactorisation de JDBC utilise une base de données de relations, une structure de table de relations doit être définie d'abord pour l'utilisation de l'application, puis des codes commerciaux liés à l'application édités par l'intermédiaire de l'API JDBC ; un nœud d'exploitation de base de données est une instruction SQL dans le nœud, une fonction de la base de données est exploitée par l'intermédiaire de l'API JDBC, et l'instruction est généralement un point d'arrivée ou un point de départ des données clés dans le trajet de propagation ; l'API JDBC est convertie en une valeur clé d'une chaîne de blocs correspondante pour exploiter une API pour la base de données, où une architecture de chaîne de blocs à source ouverte de flux principal actuelle Fabric chaincode est ciblée ; et Fabric chaincode utilise une base de données de valeurs clés Couch DB, et un procédé de refactorisation comprend l'analyse et la vérification de l'instruction SQL et de la conversion opérationnelle de l'instruction SQL à CouchDB.

2. Procédé de migration d'application d'une architecture client-serveur à une architecture de chaîne de blocs selon la revendication 1, dans lequel l'étape d'identification de module clé comprend spécifiquement : lorsqu'un ensemble kset d'un nœud de procédé *m_{cur}* n'est pas vide et qu'un ensemble kset d'un nœud de procédé père de celui-ci est vide, prise d'un sous-arbre avec *m_{cur}* en tant que nœud racine en tant que module de code clé de l'application, dans lequel le module de code clé est spécifiquement défini comme suit :
définition 7 : le module de code clé du programme d'application est représenté par Module=(*module₁, module₂...moduleₙ*), Module∈Treeᵣ, où *moduleᵢ* est un sous-arbre de *Treeₘₐᵢₙ*, représentant un mode de code clé du programme d'application et étant représenté comme suit *moduleᵢ=<M,R>(si i≠j, moduleᵢ* ∩ *moduleⱼ=* ∅ *)* ; identification du module clé : d'abord, ajout du nœud racine mₐ dans une file d'attente du nœud de procédé à analyser en prenant l'arbre d'appel de programme en tant qu'entrée et le nœud racine mₐ de l'arbre d'appel de programme en tant qu'entrée ; lorsque la file d'attente n'est pas vide, acquisition du nœud de procédé dans la file d'attente, si une source d'altération du procédé de nœud n'est pas vide, indication qu'un module clé est trouvé, et tous les nœuds suivants sont tous des nœuds de procédé dans le module clé ; si la source d'altération du procédé de nœud est vide, acquisition de tous les sous-nœuds de celui-ci et ajout des sous-nœuds dans une file d'attente des nœuds à analyser ; et enfin, lorsque l'ensemble est vide, terminaison de l'algorithme.

3. Procédé de migration d'application d'une architecture client-serveur à une architecture de chaîne de blocs selon la revendication 1, dans lequel des structures et des processus d'appel d'une application native et d'une application cible sont décrits en premier ;
le noyau d'une structure de programme cible comprend deux éléments : une fonction d'enveloppe Method_T_Wrapper et un procédé mandataire Method_T_Proxy, dans lequel un principe de fonctionnement de la structure de programme cible est comme suit : un appel direct de Method_T par Method_I est converti en un appel indirect par l'intermédiaire de Method_T_Proxy ; Method_T_Wrapper achève la fonction comme Method_T, est responsable de l'exécution d'un calcul réel, transforme Method_T, trouve des références de variables externes de celui-ci, et transforme le procédé en une forme qui est introduite par l'intermédiaire de paramètres et renvoyée par l'intermédiaire de valeurs renvoyées, et le procédé de classe modifiée est sans état ; Method_T_Proxy est un mandataire du procédé Method_T, et ses comportements externes sont cohérents avec ceux de Method_T, et le mandataire n'effectue pas de calcul réel, est responsable de la détermination d'une position d'exécution du procédé, et réalisation d'un transfert contrôlé et d'un synchronisme de données.

4. Procédé de migration d'application d'une architecture client-serveur à une architecture de chaîne de blocs selon la revendication 1, dans lequel la fonction d'enveloppe de procédé est générée par les étapes suivantes :
modification de la liste de paramètres et des valeurs renvoyées du procédé ; augmentation des paramètres params, représentant les variables externes du procédé d'origine, dans lequel les variables externes sont introduites dans un corps de procédé sous la forme de paramètres ; augmentation des instructions d'affectation des paramètres params à des variables globales global_params, dans lequel tous les procédés dans le module clé sont capables d'appeler des variables externes des procédés ; et en outre, ajout des paramètres global_params dans un résultat renvoyé, et étant capable de renvoyer une condition de changement des variables externes à un appelant de procédé ;
modification de toutes les instructions d'accès aux variables externes dans le procédé, remplacement des références variables externes c et d par des paramètres d'entrée correspondants global_params.c et global_params.d, dans lequel il n'y a pas d'instructions d'accès aux variables externes dans le procédé ; et
modification de toutes les instructions de retour du procédé, ajout des paramètres global_params dans le résultat renvoyé, dans lequel la condition de changement des variables externes peut être renvoyée à l'appelant de procédé.

5. Procédé de migration d'application d'une architecture client-serveur à une architecture de chaîne de blocs selon la revendication 1, dans lequel une règle de construction pour le mandataire de procédé est comme suit :
maintien d'une signature de procédé et d'un type de retour du mandataire de procédé cohérents avec ceux du procédé d'origine ;
augmentation des instructions de traitement de variables supplémentaires ; construction d'un params variable de type Params, et affectation des params avec des informations variables externes du procédé ;
augmentation des instructions d'appel de la fonction d'enveloppe de procédé dans un Fabric chaincode ; dans une matrice Hyperledger Fabric, appel de la fonction d'enveloppe de procédé Method_T_Wrapper dans le code de chaîne par l'intermédiaire d'un objet fabricManager fourni par sdk, et en outre, envoi de paramètres d'appel de la fonction d'enveloppe de procédé ; et
augmentation des résultats renvoyés appelés par un procédé de réception d'instruction, dans lequel les variables externes du procédé sont mises à jour en utilisant des données de résultat pour garantir la cohérence de l'état de programme, et en outre, renvoi d'une valeur renvoyée par l'appel de procédé à l'appelant de celui-ci.
